# EUROPEAN PATENT SPECIFICATION

(11) **EP 0 482 765 B1**
(45) Date of publication and mention of the grant of the patent: **01.03.1995**
(21) Application number: 91308742.5
(22) Date of filing: 25.09.1991
(51) Int. Cl.: G01J 3/04, G01J 3/12

(54) **Monochromator having slits of particular form**
Monochromator mit speziell geformten Spalten
Monochromateur ayant des fentes particulières

(30) Priority: 29.09.1990 JP 262580/90
(43) Date of publication of application: 29.04.1992
(73) Proprietor: SHIMADZU CORPORATION, Nakagyo-ku Kyoto-shi Kyoto 604 (JP)
(72) Inventor: Sato, Tatsumi, Otokunigun, Kyotofu 618 (JP)
(74) Representative: Cotter, Ivan John

(56) References cited:
- PATENT ABSTRACTS OF JAPAN, vol. 3, no. 155 (E-160), 19 December 1979 & JP-A-54136359
- OPTICAL ENGINEERING, vol. 19, no. 4, 1980, Bellingham, US, pages 623-627; ESPLIN: "Use of curved slits to increase throughput of a Hadamard sprectrometer"

## Description

The invention relates to monochromators, and particularly (but not exclusively) relates to monochromators which can be used in spectrophotometers or other measurement apparatus.

A monochromator includes an entrance slit plate having an entrance slit, a light separator (such as a diffraction grating, a prism, etc.), and an exit slit plate having an exit slit. Light coming into a monochromator through the entrance slit is separated (or dispersed) by the light separator into a series of monochromatic light components, and an image of the entrance slit of every monochromatic light component is projected onto the exit slit plate. Thus, monochromated light of varying wavelength comes out of the exit slit while the monochromator scans through a preset range of wavelengths.

In previously proposed monochromators, the entrance and exit slits are both rectangular and have their longer dimensions extending in the direction perpendicular to the direction of separation of light. (The direction of separation of light is hereinafter referred to as "the lateral direction"). A spectrophotometer that uses a monochromator equipped with slits of such shape has the following problem.

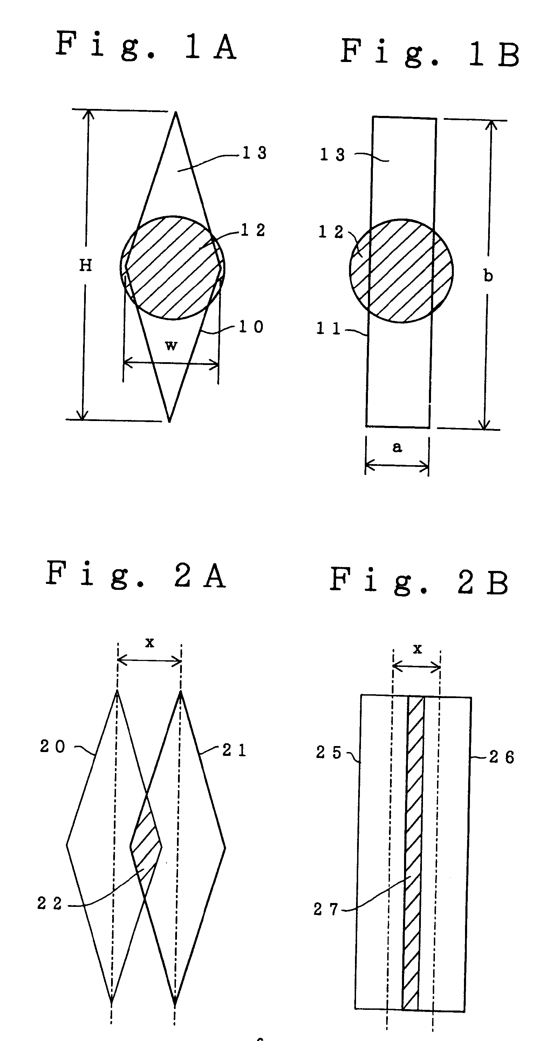

When a sample is measured in a spectrophotometer, a bundle of light coming out of the exit slit of the monochromator is focussed onto a sample to be measured, where an image of the exit slit is formed, as shown in Figure 1B of the accompanying drawings. Thus, the bundle of light (11) for measuring the sample (12) is rectangular in shape: it has the shape of the exit slit of the monochromator. When an ordinary box sample cell is used with a sufficient amount of sample material in it, it is possible to arrange for all of the measurement light to pass through the sample. However, when a flow sample cell is used, or when a small-sized sample or small amount of sample is measured, it transpires that only a part of the measurement light can pass through the sample. Thus, the efficiency of light in the measurement becomes low since, as shown in Figure 1B, a part 13 of the measurement light 11 external to the sample 12 is not used for the measurement.

A different arrangement is shown in JP-A-54 136 359. This document discloses the use of circular entrance and exit openings, instead of conventional slits, in a monochromator in order to match the image to the core diameter of an optical fibre.

According to the invention, a monochromator is constructed so that elongate entrance and exit slits thereof are each shaped so that the width of the slit becomes smaller towards both ends of its height (where the width is the dimension in the lateral direction).

An example of such a shape is shown in Figure 1A of the accompanying drawings, in which the slit 10 is of rhombic shape. When compared to the known shape shown in Figure 1B, it is apparent that the efficiency of light is greater in the case of Figure 1A, where a larger amount of light is projected on a small sample 12 and a lesser amount of light 13 is wasted than the light emitted from the known rectangular slit. This comparison is made under the conditions that (a) the brightness of the monochromator (i.e. the total amount of the measurement light emitted from the exit slit) is the same: and (b) the resolution of the monochromator is the same. The above-mentioned problem of low efficiency may thus be alleviated.

The invention will now be further described, by way of illustrative and non-limiting example, with reference to the accompanying drawings, in which:
Figure 1A is a diagram showing an image of a rhombic slit of a monochromator embodying the invention projected onto a small sample;
Figure 1B is a diagram showing an image of a previously proposed rectangular slit projected onto a small sample;
Figure 2A is a diagram showing the image of a rhombic entrance slit overlapping a rhombic exit slit;
Figure 2B is a diagram showing the image of a rectangular entrance slit overlapping a rectangular exit slit;
Figure 3A is a graph showing a spectrum peak of a monochromatic light component emitted from the rhombic slit;
Figure 3B is a graph showing a spectrum peak of a monochromatic light component emitted from the rectangular slit;
Figure 4 shows a slit employed in another monochromator embodying the invention; and
Figure 5 shows a slit employed in a further monochromator embodying the invention.

A first monochromator embodying the invention is equipped with an entrance slit and an exit slit each of rhombic shape as shown in Figure 1A, the shorter diagonal being parallel to the direction of the separation of the composite light. In monochromators, the entrance slit and the exit slit have the same shape since the image of the entrance slit is emitted from the exit slit. The effect of the rhombic shape of the slits will now be described in comparison with that of the known slits of rectangular shape as shown in Figure 1B.

When monochromatic light enters the monochromator through the entrance slit and wavelength scanning is carried out by the monochromator, an image of the entrance slit moves on the exit slit plate in the lateral direction. When the image of the entrance slit moves in the lateral direction, it passes over the exit slit, and a portion 22 (27) of the image 20 (25) of the entrance slit overlapping the exit slit 21 (26) is emitted from the monochromator as shown in Figure 2A (2B). Thus, the amount of light emitted from the monochromator is proportional to the area of the overlapping portion 22, 27. The area increases parabolically in the case of the rhombic slits (Figure 2A) and linearly in the case of the rectangular slits (Figure 2B) as the distance x between the image of the entrance slit 20, 25 and the exit slit 21, 26 decreases to zero (at which the image 20, 25 and the exit slit 21, 26 coincide).

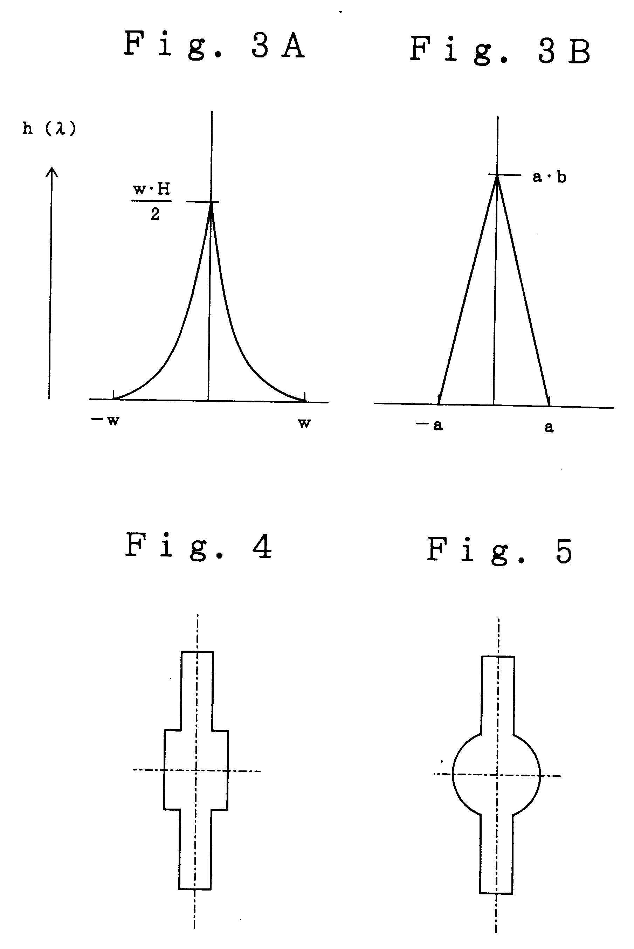

The change in the amount of light emitted from the monochromator versus the distance x is shown in Figures 3A and 3B. Since the image 20, 25 is made of monochromatic light, these graphs show a spectrum peak of monochromatic light emitted from the exit slit. (In Figures 3A and 3B, the peak position of the spectrum peak curve is set at zero for convenience of explanation. The actual peak position of monochromatic light having a wavelength λ ₀ is at the wavelength λ ₀.)

The shape of the spectrum peak of Figure 3A (caused by the rhombic slits) can be formulated as follows: 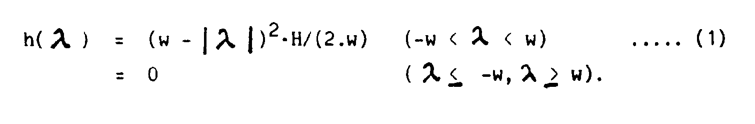
The shape of the spectrum peak of Figure 3B (caused by the rectangular slits) can be formulated as follows:

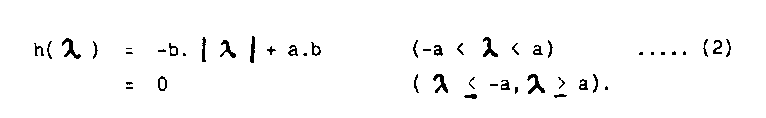

The resolution of the monochromator depends on the width of the slits. Since the resolution is normally defined by the half-value width of the spectrum peak, the relationship between the width w of the rhombic slit (Figure 1A) and the width a of the rectangular slit (Figure 1B) for obtaining the same resolution is:$\text{w = a/(2 - √2) = 1.7 . a}$
which is deduced from Equations (1) and (2) by equalising the half-value widths of the spectrum peaks of Figures 3A and 3B.

For obtaining the same brightness (amount of light emitted from the monochromator) with the resolution being maintained the same, the relationship between the height H of the rhombic slit and the height b of the rectangular slit is:$\text{H = 3.(2 - √2)².b ≈ b}$
which is deduced from Equations (1) and (2) by equalising the areas of the spectrum peaks of Figures 3A and 3B.

Equations (3) and (4) show that the width of the rhombic slit is 1.7 times, and the height is approximately the same, as the width and height of the rectangular slit for obtaining the same resolution and the same brightness. Thus, as can be seen by comparing Figures 1A and 1B, the light emitted from the rhombic slit 10 can cover a larger part of a small sample 12 than that emitted from the known rectangular slit 11. That is, by using measurement light produced by the monochromator of the present embodiment, a greater efficiency of light can be achieved in a measurement using a flow sample cell or when a small sample is measured.

Next, the stray light will be considered. The amount of stray light in a monochromator is proportional to the amount of light entering into the monochromator through the entrance slit, i.e. proportional to the area of the entrance slit. Since the stray light disperses uniformly within the monochromator, the amount of stray light emitted from the exit slit is further proportional to the area of the exit slit. Therefore, the amount of stray light emitted from the monochromator is proportional to the product of the areas of the entrance slit and the exit slit. The important thing about the stray light is not its absolute amount but the relative amount (ratio) C in the light emitted from the monochromator. For the rhombic slit 10 of Figure 1A, the ratio C_{A} is:${\text{C}}_{\text{A}} \text{= (a.b)²/(a².b) = b,}$
where (a².b) is the amount of light emitted from the monochromator, and for the rectangular slit 11 of Figure 1B, the ratio C_{B} is:${\text{C}}_{\text{B}} \text{= {(w².H²)/4}/{(w².H)/3} = (3/4).H.}$
If the amount of emitted light and the resolution are assumed to be equal, the ratios C_{A} and C_{B} of the two types of slits have the relationship:${\text{C}}_{\text{B}} {\text{/C}}_{\text{A}} \text{= 3/4}$
since H≈b as described above. Equation (5) means that the ratio of stray light in the light emitted from the monochromator is reduced to 3/4 if rhombic slits are used. Thus, the signal to noise (S/N) ratio of a spectrophotometer using the monochromator of the present embodiment is increased, and the sensitivity and accuracy of measurements made by the spectrophotometer is improved.

In the above explanation of the comparison of the stray light, the two types of slits are compared assuming the same levels of brightness and resolution. If, on the other hand, the same resolution and same stray light level are assumed, the brightness of the monochromator of the present embodiment can be larger than that of the known monochromators, or, if the same brightness and the same stray light level are assumed, higher resolution can be obtained.

The manner in which the narrowing of the width of slits of monochromators embodying the invention is carried out is not limited to the example shown in Figure 1A. The width can for example be reduced in a stepwise manner from the centre to the ends as shown in Figures 4 and 5, and the same arguments as above apply to any slits of monochromators embodying the invention as long as the width narrows towards the ends. Specifically, in the case of Figures 4 and 5, the slits each comprise a rectangle having its longer dimension extending in the direction perpendicular to the direction of the separation of the composite light and having a widthwise bulge at or about its centre. The bulge is of rectangular shape in Figure 4 and of circular shape in Figure 5.

## Claims

1. A monochromator comprising an elongate entrance slit for receiving composite light, means for separating the composite light into a series of monochromatic light components, and an elongate exit slit for emitting monochromatic light, wherein each of the entrance and exit slits is so arranged that its shorter dimension, i.e. the width, is parallel to the direction of the separation of the composite light and its longer dimension, i.e. the height, is perpendicular thereto, characterised in that the entrance and exit slits are both shaped so that the width of the slit varies along its height such as to become smaller towards both ends of its height.

2. A monochromator according to claim 1, wherein the entrance and exit slits (10) are of rhombic shape with the shorter diagonal parallel to the direction of the separation of the composite light.

3. A monochromator according to claim 1, wherein the entrance and exit slits each comprise a rectangle having its longer dimension extending in the direction perpendicular to the direction of the separation of the composite light and having a widthwise bulge at or about its centre.

4. A monochromator according to claim 3, wherein the bulge is of rectangular shape.

5. A monochromator according to claim 3, wherein the bulge is of circular shape.

## Patentansprüche

1. Monochromator mit einem langgestreckten Eintrittsschlitz zum Empfang von zusammengesetztem Licht, Mitteln zum Trennen des zusammengestzten Lichts in eine Reihe von monochromatischen Lichtkomponenten, und einem langgestreckten Austrittsschlitz zur Abgabe von monochromatischem Licht, wobei der Eintritts- und Austrittsschlitz so angeordnet sind, daß ihre kürzere Abmessung, d.h. die Breite, parallel zur Richtung der Trennung des zusammengestzten Lichts und ihre längere Abmessung, d.h. die Höhe, senkrecht dazu ist, dadurch gekennzeichenet, daß Eintritts- und Austrittsschlitz beide so geformt sind, daß sich die Breite des Schlitzes längs seine Höhe so ändert, daß sie kleiner zu beiden Enden seiner Höhe hin wird.

2. Monochromator nach Anspruch 1, wobei der Eintritts- und Austrittsschlitz (10) rhombische Form mit der kürzeren Diagonale parallel zur Richtung der Trennung des zusammengesetzten Lichts haben.

3. Monochromator nach Anspruch 1, wobei der Eintritts- und Austrittsschlitz jeweils ein Rechteck aufweisen, das sich mit seiner längeren Abmessung in der Richtung senkrecht zur Richtung der Trennung des zusammengesetzten Lichts erstreckt und eine Ausbauchung in Breitenrichtung in seiner oder etwa in seiner Mitte aufweist.

4. Monochromator nach Anspruch 3, wobei die Ausbauchung rechteckige Form hat.

5. Monochromator nach Anspruch 3, wobei die Ausbauchung Kreisform hat.

## Revendications

1. Dispositif pour rendre monochrome une lumière composite, comprenant : une fente d'entrée allongée pour recevoir la lumière composite ; un moyen pour séparer la lumière composite en une série de composantes de lumière monochromatique ; et une fente de sortie allongée pour émettre de la lumière monochromatique, dans lequel chacune des fentes d'entrée et de sortie est disposée de manière telle que sa plus courte dimension, c'est-à-dire, sa largeur, soit parallèle à la direction de séparation de la lumière composite et que sa plus longue dimension, c'est-à-dire sa hauteur, soit perpendiculaire à celle-ci, caractérisé en ce que les fentes d'entrée et de sortie sont toutes deux conformées de telle manière que la largeur de la fente varie le long de sa hauteur de façon à devenir plus petite en direction des deux extrémités de sa hauteur.

2. Dispositif pour rendre monochrome une lumière composite selon la revendication 1, dans lequel les fentes d'entrée et de sortie (10) sont en forme de losange, la diagonale plus courte étant parallèle à la direction de séparation de la lumière composite.

3. Dispositif pour rendre monochrome une lumière composite selon la revendication 1, dans lequel les fentes d'entrée et de sortie comprennent chacune un rectangle dont la plus longue dimension s'étend dans la direction perpendiculaire à la direction de séparation de la lumière composite et comportant, en son centre ou à proximité de celui-ci, un renflement dans le sens de la largeur.

4. Dispositif pour rendre monochrome une lumière composite selon la revendication 3, dans lequel le renflement est de forme rectangulaire.

5. Dispositif pour rendre monochrome une lumière composite selon la revendication 3, dans lequel le renflement est de forme circulaire.
